Europäisches Patentamt

(19) **European Patent Office**

**Office européen des brevets**

(11) Numéro de publication: **0 165 189**
**B1**

(12) **FASCICULE DE BREVET EUROPÉEN**

(45) Date de publication du fascicule du brevet:
29.03.89

(51) Int. Cl.⁴: **B 23 D 47/04**

(21) Numéro de dépôt: **85440028.0**

(22) Date de dépôt: **02.05.85**

(54) Dispositif de maintien des matériaux en plaques sur les tables d'une machine à scier.

(30) Priorité: 09.05.84 FR 8407251

(43) Date de publication de la demande:
18.12.85 Bulletin 85/51

(45) Mention de la délivrance du brevet:
29.03.89 Bulletin 89/13

(84) Etats contractants désignés:
AT BE CH DE GB IT LI LU NL SE

(56) Documents cité:
DE-C-58 887
DE-C-845 935
FR-A-1 435 714
FR-A-2 248 916
US-A-1 976 972

(73) Titulaire: **SMID S.A., Société Anonyme dite:, 54,
rue Poincaré, F-68460 Lutterbach (FR)**

(72) Inventeur: **Erhard, Raymond, 6, rue de la Carrière,
F-68760 Willer- Sur- Thur (FR)**

(74) Mandataire: **Aubertin, François, Cabinet Lepage &
Aubertin Innovations et Prestations 4, rue de
Haguenau, F-67000 Strasbourg (FR)**

## Description

L'invention concerne un dispositif de maintien des matériaux en plaques sur les tables d'une machine à scier, notamment pour la dernière coupe des matériaux en plaques, comprenant un mécanisme d'appui soumis à un mouvement vertical par un vérin.

Les machines à scier dont la lame de scie se déplace transversalement par rapport aux matériaux en plaques comportent, entre autres, un guide mobile exerçant une poussée cyclique longitudinale sur la pile de matériaux en plaques au-fur-et-à-mesure des coupes transversales. Ce guide mobile comporte des pinces de serrage composées d'un bec inférieur sur lequel repose la pile et d'un bec supérieur exerçant une pression sur ladite pile. Ce guide mobile est placé à l'extrémité arrière de la pile vue dans le sens d'avance de celle-ci et il s'avère nécessaire de tenir la pile de matériaux en plaques pendant la coupe. A cet effet, on a conçu un mécanisme d'appui situé au-dessus de la lame de scie et qui vient, à chaque cycle de coupe, se poser sur le dessus de la pile. En général, le cycle de coupe est prévu de façon à utiliser la dernière bande de la pile des matériaux en plaques sous réserve que celle-ci soit de largeur supérieure à une largeur donnée dépendant des caractéristiques de chaque type de machine à scier.

Cependant, lorsque les pinces de serrage sont proches de la lame de coupe, il devient difficile de couper la pile de matériaux en plaques du fait que le mécanisme d'appui ne peut exercer une pression sur la pile par-dessus les pinces de serrage. Il est donc nécessaire de prévoir des moyens de maintien de la pile situés au-delà de la lame de scie et qui ont pour fonction de tenir la pile de matériaux en plaques pendant l'ouverture des pinces et leur dégagement de la ligne de coupe et que le mécanisme d'appui exerce une pression sur ladite pile.

On a conçu différents dispositifs. Un de ces dispositifs connus comporte un vérin solidaire du mécanisme d'appui et placé au-delà de la ligne de coupe. On actionne en premier ledit vérin et, lorsque celui-ci est en contact avec la pile de matériaux en plaques, on actionne, dans un second temps, le mécanisme d'appui. Cependant, ce dispositif présente plusieurs inconvénients. Les vérins sont fixés sur le mécanisme d'appui et exercent une pression sur la pile pendant la phase de descente du mécanisme d'appui. Fréquemment, ce dernier est constitué d'une poutre de grande longueur. Ce guidage n'est pas assuré au centre de la pile. Il en résulte un déplacement latéral des vérins sous l'action conjuguée des efforts de serrage de ces vérins et du mouvement de descente du mécanisme d'appui. Ce déplacement latéral provoque le glissement de la pile des différentes plaques, ce qui diminue considérablement la précision de la coupe. Or, pour certains matériaux en plaques utilisés, notamment pour la fabrication de circuits imprimés, une haute précision de coupe est indispensable. Par ailleurs, il faut également avoir la possibilité de positionner des vérins au droit des bandes lorsque la coupe concerne plusieurs bandes placées côte à côte. Il est nécessaire, dans ce cas, de prévoir un mécanisme de déplacement des vérins pour assurer leur positionnement précis.

Pour pallier à ces inconvénients, on a conçu un dispositif dans lequel le ou les vérins sont séparés du mécanisme d'appui. Les vérins sont solidaires d'une poutre porteuse parallèle à la poutre porteuse du mécanisme d'appui. Le fonctionnement est le suivant au cours de l'avance de la pile des matériaux en plaques, le mécanisme d'appui et les vérins sont en position haute. Puis, on abaisse les vérins venant s'appuyer sur le dessus des piles, puis on abaisse le mécanisme d'appui. Cependant, il est souhaitable que l'action des vérins soit réalisée le plus près du mécanisme d'appui. C'est pourquoi, on pourvoit les têtes des pistons de ces vérins d'un disque d'appui. Toutefois, dans le cas de bandes de faible largeur, le disque d'appui n'est en contact avec la bande que sur une faible partie de sa surface. De ce fait, l'effort fourni par le vérin n'est pas uniformément réparti et le disque d'appui est en porte-à-faux. Ceci entraîne un fléchissement des pistons des vérins provoquant un glissement des différents matériaux en plaques empilés les uns sur les autres. Il en résulte une mauvaise précision de sciage incompatible avec la destination future des plaques coupées.

On a également conçu un autre moyen pour maintenir les matériaux à couper. Ce moyen consiste en des ouvertures réalisées dans la paroi arrière de la poutre du mécanisme d'appui permettant l'ouverture et le dégagement de la ou des pinces de serrage. Ainsi, lors de l'utilisation du mécanisme d'appui, seule la paroi avant exerce une pression sur la pile des matériaux en plaques. Toutefois, ce dispositif présente plusieurs inconvénients, notamment les ouvertures réalisées dans la paroi arrière de la poutre affaiblissent cette dernière. De plus, la pile de matériaux en plaques n'est pas tenue à l'arrière sur la largeur des ouvertures, ce qui n'est pas acceptable dans certaines conditions de coupe déterminées par le produit à couper et/ou la lame de scie.

La présente invention a pour but de remédier à ces inconvénients. L'invention, telle qu'elle est caractérisée dans les revendications, résout le problème consistant à créer un dispositif de maintien des matériaux en plaques sur les tables d'une machine à scier, notamment pour la dernière coupe des matériaux en plaques comprenant, en plus d'un mécanisme d'appui soumis à un mouvement vertical par un verin, un mécanisme de relais pourvu d'une barre de pression transversale s'étendant sur toute la longueur des tables de la machine à scier et dont chaque extrémité comporte un support vertical pourvu de paliers munis d'un coussinet, cette barre de pression transversale étant soumise à un mouvement vertical provoqué par des moyens moteurs constitués par au moins un vérin, dont l'extrémité inférieure est solidaire d'une semelle fixée sur la table en aval de la lame de scie et dont l'extrémité du piston est solidaire d'une traverse, elle-même solidaire des supports verticaux et coopérant avec ces derniers par l'intermédiaire de moyens de transmission constitués par un axe de guidage dont l'extrémité inférieure est solidaire de la semelle, cet axe de guidage, ayant un axe vertical situé à proximité du chant de la semelle pour rapprocher le plus possible la barre de pression du mécanisme de relais du mécanisme d'appui, étant pourvu d'une crémaillère le long de laquelle se déplace un pignon denté et par un arbre transversal comportant à chaque extrémité le pignon denté, cet arbre transversal maintenu par des paliers solidaires de la barre de pression et par des consoles verticales solidaires des paliers assurant aux deux extrémités de la barre de pression un déplacement vertical identique.

Les avantages obtenus grâce à cette invention consistent essentiellement en ce que le dispositif permet d'améliorer la précision de coupe, notamment lors du sciage de la dernière bande. Par ailleurs, la barre de pression reste valable pour toutes les largeurs de bandes obtenues par sciage de la pile de matériaux en plaques et qu'elle permet de serrer cette pile au plus près de la poutre du dispositif d'appui. De plus, l'effort de serrage est régulièrement réparti sur la longueur de la pile.

L'invention est exposée ci-après plus en détail à l'aide de dessins représentant seulement un mode d'exécution.

La figure 1 représente en vue en élévation le dispositif de maintien utilisé pour le serrage de la pile de matériaux en plaques conforme à l'invention.

La figure 2 représente en vue en élévation et en coupe le mécanisme de relais conforme à l'invention.

La figure 3 représente une vue en coupe selon ligne de coupe III - III de la figure 2.

La figure 4 représente en vue en élévation et en coupe le mécanisme d'appui.

La figure 5 représente une vue latérale du mécanisme d'appui.

La figure 6 représente une vue en plan du mécanisme de relais.

La figure 7 représente en vue latérale la barre de pression du mécanisme de relais.

La figure 8 représente en vue en plan le mécanisme d'appui.

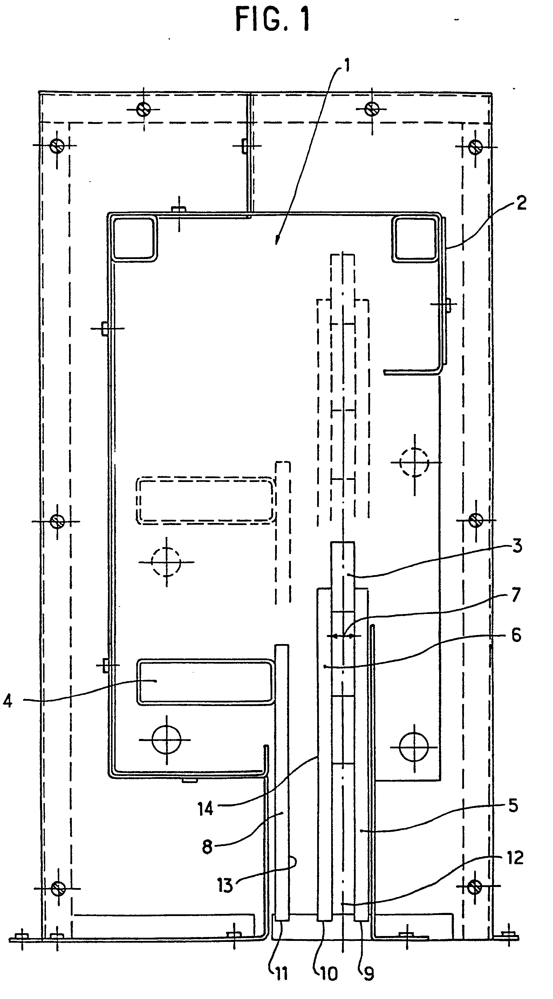

On se réfère à la figure 1.

Le dispositif de maintien 1, renfermé dans un capot de protection 2, se compose d'un mécanisme d'appui 3 et d'un mécanisme de relais 4. Le mécanisme d'appui 3 comporte deux poutres 5 et 6 entre lesquelles est situé un espace libre 7 pour le passage de la lame de scie. A proximité immédiate de la poutre 6 placée en aval de la lame de scie est disposée une barre de pression 8 du mécanisme de relais 4. Le fonctionnement du dispositif de maintien 1 est le suivant: au cours de l'avance de la pile de matériaux en plaques, le mécanisme d'appui 3 et le mécanisme de relais 4 sont en position haute tels que représentés en pointillés dans la figure 1. Après positionnement de la pile de matériaux en plaques, on abaisse les deux mécanismes 3 et 4. Les chants inférieurs 9, 10 des deux poutres 5 et 6 prennent contact avec ladite pile. Il en est de même pour le chant inférieur 11 de la barre de pression 8 du mécanisme de relais 4. Ainsi, la bande de la pile située au-delà du trait de scie 12 est maintenue simultanément par le chant inférieur 10 de la poutre 6 du mécanisme d'appui 3 et par le chant inférieur 11 de la barre de pression 8 du mécanisme de relais 4. En raison de l'action double, la bande située au-delà du trait de scie 12 est fortement maintenue et il ne peut y avoir de glissement d'une plaque par rapport à sa voisine. Par ailleurs, la face avant 13 de la barre de pression 8 peut être située à proximité immédiate de la face arrière 14 de la poutre 6. De ce fait, la bande peut être de faible largeur de l'ordre de trente à quarante millimètres.

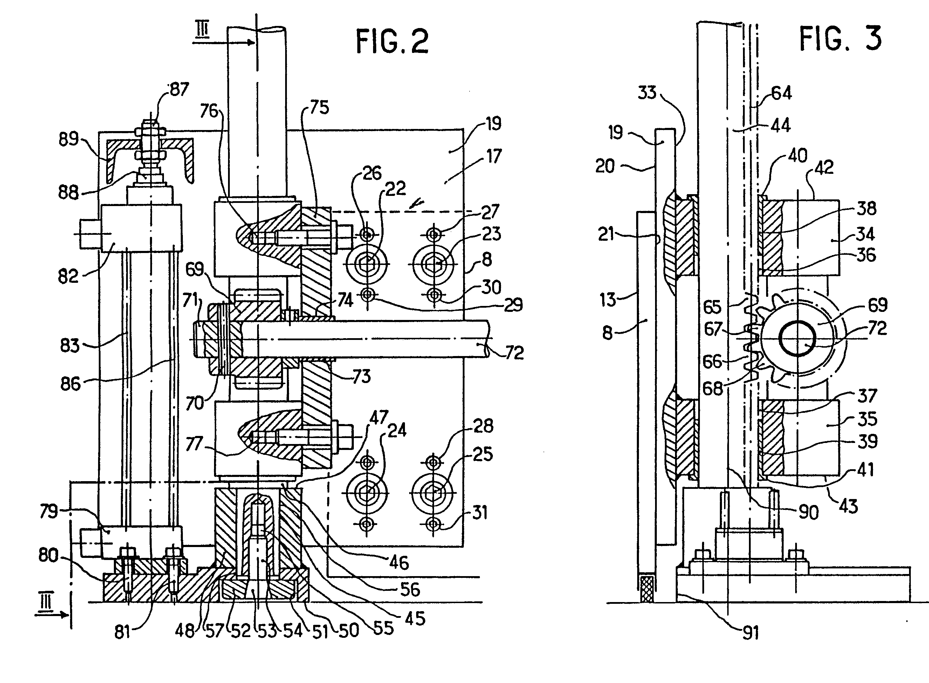

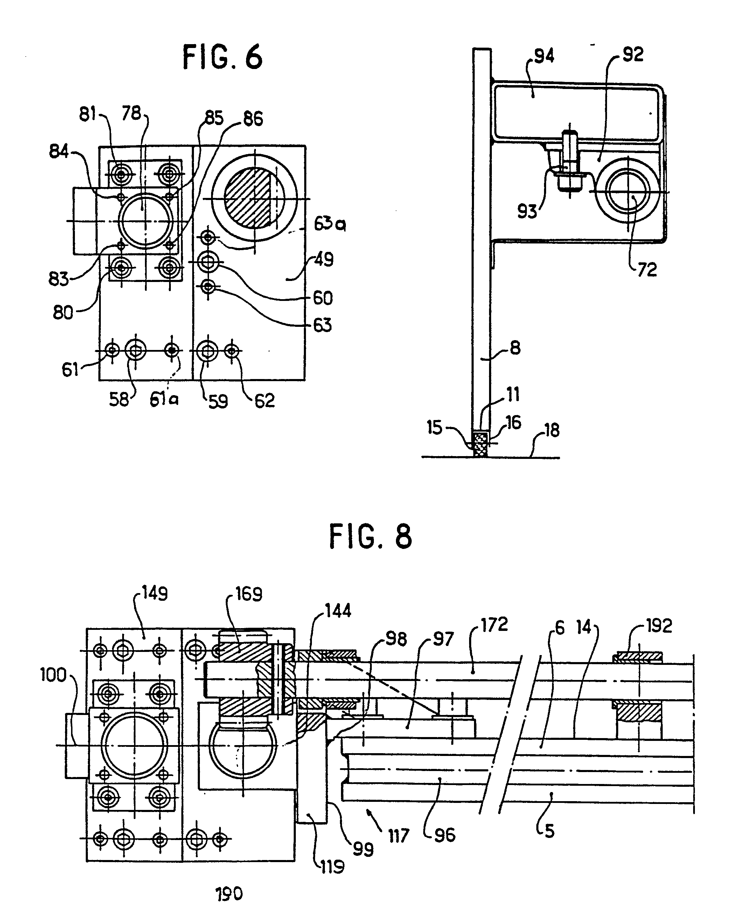

On se réfère aux figures 2, 3, 6 et 7 représentant le mécanisme de relais 4. Le mécanisme de relais 4 comporte, comme décrit ci-dessus, une barre de pression 8 dont le chant inférieur 11 est pourvu d'une lèvre élastique 15, notamment une lèvre en caoutchouc pour éviter de détériorer le dessus de la pile des matériaux en plaques. Cette lèvre élastique 15 est maintenue par une pince 16 solidaire dudit chant inférieur 11. Chaque extrémité 17 de la barre de pression 8 coopère avec un ensemble de moyens moteurs et de transmission impliquant à la barre de pression 8 un mouvement vertical soit vers le haut, soit vers le bas. Dans la description ci-dessous ne sera décrit qu'un seul ensemble de moyens moteurs, étant entendu que les deux ensembles sont identiques et sont disposés aux deux extrémités de la barre de pression 8 dont la longueur correspond à la longueur de la table avant 18 de la machine à scier pourvue du dispositif de maintien 1 conforme à l'invention.

L'ensemble de moyens comporte un support vertical 19 dont la face avant 20 est rendue solidaire de la face arrière 21 de la barre de pression 8 par des éléments de fixation 22, 23, 24, 25. Cependant, il est nécessaire que ce support vertical 19 soit rigoureusement parallèle à la barre de pression 8. A cet effet, on prévoit des vis de réglage 26, 27, 28... vissées dans des trous taraudés 29, 30, 31... réalisés dans le support vertical 19 et prenant appui contre la face arrière 21 de la barre de pression 8. Sur la face arrière 33 du support vertical 19 sont fixés deux paliers 34, 35 comportant un alésage 36, 37 dans lequel est logé un coussinet 38, 39 pourvu d'un épaulement 40, 41 prenant appui contre une des faces 42, 43 des paliers 34, 35. Ces coussinets 38, 39 sont traversés verticalement par un axe de guidage 44

dont l'extrémité inférieure 45 présente un épaulement 46 reposant sur la face supérieure 47 d'une douille 48 solidaire d'une semelle 49. Cette dernière comporte sur sa face inférieure 50 un logement 51 dans lequel est noyée une plaque de fixation 52 traversée par une vis de fixation 53 dont l'extrémité filetée 54 est vissée dans un trou taraudé 55 pratiqué dans l'extrémité inférieure 45, cette dernière traversant un alésage 56 réalisé dans la douille 48 et un trou 57 fait dans la semelle 49 et aboutant au logement 51. La semelle 49 est rendue solidaire de la table avant 18 par des éléments de fixation 58, 59, 60 et l'horizontalité peut être réglée par des vis de réglage 61, 62, 63, 61a, 63a.

L'axe de guidage 44 comporte une crémaillère 64. Les dents 65, 66 de la crémaillère 64 coopèrent avec les dents 67, 68... d'un pignon denté 69. Celui-ci, rendu solidaire en rotation par un axe 70, est disposé à l'extrémité 71 d'un arbre transversal 72 reliant entre eux les moyens moteurs situés de chaque côté de la barre de pression 8. L'arbre transversal 72 tourne dans un coussinet 73 engagé dans un alésage 74 réalisé dans une console verticale 75 rendue solidaire des paliers 34, 35 par des éléments de fixation 76, 77.

Au moins un des ensembles de moyens comporte un vérin 78 dont l'extrémité inférieure 79 est rendue solidaire de la semelle 49 par des éléments de fixation 80, 81. Cette extrémité inférieure 79 est reliée à une extrémité supérieure 82 par des tringles 83, 84, 85, 86. L'extrémité 87 du piston 88 de ce vérin 78 est solidaire d'une traverse 89, elle-même solidaire du support vertical 19. En actionnant le vérin 78, le piston 88 exerce soit une poussée, soit une traction sur la traverse 89 qui transmet celle-ci au support vertical 19 et, par voie de conséquence, à la barre de pression 8. Au cours de ce déplacement vertical, la crémaillère 64 provoque la rotation de l'arbre transversal 72 par l'intermédiaire du pignon denté 69. La rotation de l'arbre transversal 72 entraîne un pignon denté du second ensemble de moyens moteurs. De ce fait, on confère aux deux extrémités 17 de la barre de pression 8 un déplacement vertical identique. Ainsi, on assure l'horizontalité de la barre de pression 8 et une pression uniforme sur toute la largeur de la pile de matériaux en plaques.

Selon l'invention, l'axe vertical 90 de l'axe de guidage 44 se trouve le plus près possible du chant 91 de la semelle 49 pour rapprocher le plus possible la barre de pression 8 de la poutre 6 du mécanisme d'appui 3.

L'arbre transversal 72 est maintenu par des paliers 92 rendus solidaires par des éléments de fixation 93 d'un profilé tubulaire 94 solidaire de la face arrière 21 de la barre de pression 8.

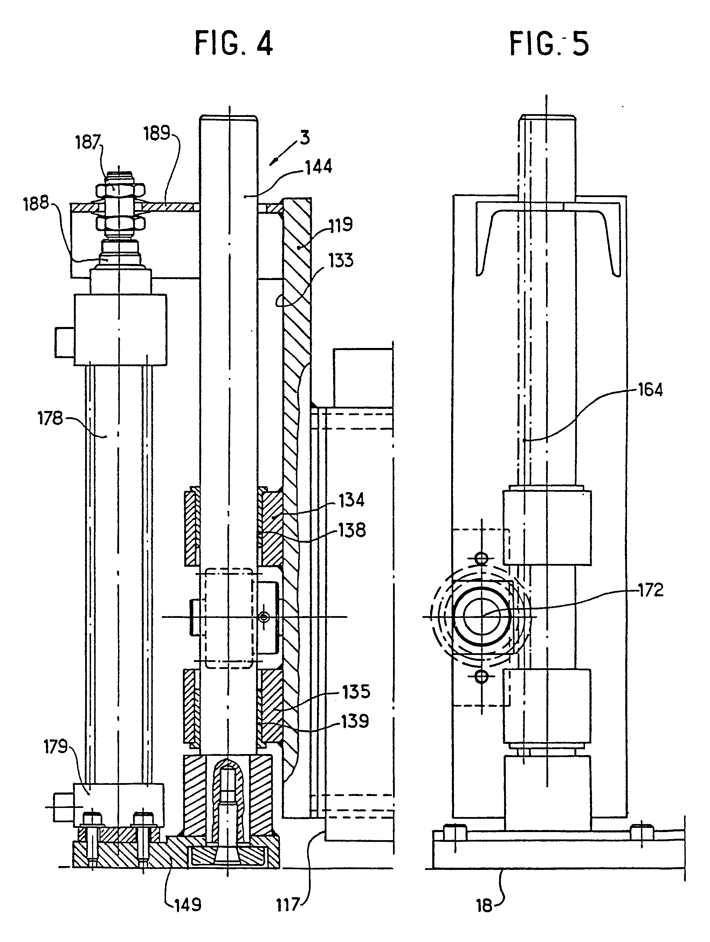

On se réfère aux figures 4, 5 et 8 représentant le mécanisme d'appui 3. La structure de ce mécanisme est pratiquement la même que celle du mécanisme de relais 4. Les deux poutres 5 et 6 sont reliées entre elles par une entretoise 96. Chaque extrémité 117 de cet ensemble formé par les deux poutres 5, 6 et l'entretoise 96 est solidaire d'un support intermédiaire 97 dont une des extrémités 98 est solidaire d'une des faces 99 d'un support vertical 119. Ce support intermédiaire 97 est disposé perpendiculairement audit support vertical 119 et parallèlement aux poutres 5 et 6. L'autre face 133 du support vertical 119 est pourvue de deux paliers 134, 135 pourvus d'un coussinet 138, 139 traversés verticalement par un axe de guidage 144. Celui-ci est solidaire d'une semelle 149 fixée sur la table avant 18. L'axe vertical 190 de l'axe de guidage 144 est situé dans le plan vertical 100 de la semelle 149. Ledit axe de guidage 144 comporte une crémaillère 164 sur laquelle se déplace un pignon denté 169. Celui-ci est solidaire en rotation d'un arbre transversal 172 reliant entre eux les moyens moteurs situés de chaque côté de l'ensemble des poutres 5, 6. Cet arbre transversal 172 est maintenu par des paliers 192 pourvus de coussinets solidaires de la face arrière 14 de la poutre 6.

L'extrémité supérieure du support vertical 119 comporte une traverse 189 sur laquelle est fixée l'extrémité 187 d'un piston 188 d'un vérin 178. L'extrémité inférieure 179 de ce vérin 178 est solidaire de la semelle 149. En actionnant le vérin 178, le piston 188 soumet, par l'intermédiaire de la traverse 189, le support vertical 119 à un mouvement vertical. Celui-ci provoque également, d'une part, le mouvement vertical de l'ensemble des poutres 5, 6 et, d'autre part, la rotation du pignon denté 169 et, par voie de conséquence, la rotation du pignon denté 169 provoque, par la rotation de l'arbre transversal 172, le déplacement vertical du support vertical situé de l'autre côté de l'ensemble des poutres 5, 6. Ainsi, au cours des mouvements de montée et de descente des poutres 5, 6, ces dernières restent strictement horizontales et la pression est uniforme sur toute la largeur de la pile de matériaux en plaques.

## Revendications

1. Dispositif de maintien des matériaux en plaques sur les tables (18) d'une machine à scier, notamment pour la dernière coupe des matériaux en plaques, comprenant un mécanisme d'appui (3) soumis à un mouvement vertical par un vérin (178) caractérisé en ce qu'il comporte un mécanisme de relais (4) pourvu d'une barre de pression transversale (8) s'étendant sur toute la longueur des tables (18) de la machine à scier et dont chaque extrémité (17) comporte un support vertical (19) pourvu de paliers (34, 35) munis d'un coussinet (38, 39), cette barre de pression transversale (8) étant soumise à un mouvement vertical provoqué par des moyens moteurs constitués par au moins un vérin (78) dont l'extrémité inférieure (79) est solidaire d'une semelle (49) fixée sur la table (18) en aval de la lame de scie et dont l'extrémité (87) du piston (88) est solidaire d'une traverse (89) elle-même solidaire des supports verticaux (19) et coopérant avec ces derniers par l'intermédiaire de moyens de transmission constitués par un axe de guidage (44) dont l'extrémité inférieure (45) est solidaire de la semelle (49), cet axe de guidage (44) ayant un axe vertical (90) situé à proximité du chant (91) de la semelle (49) pour rapprocher le plus possible la barre de pression (8) du mécanisme de relais (4) du mécanisme d'appui (3), étant pourvu d'une crémaillère (64) le long de laquelle se déplace un pignon denté (69) et par un arbre transversal (72) comportant à chaque extrémité le pignon denté (69), cet arbre transversal (72) maintenu par des paliers (92) solidaires de la barre de pression (8) et par des consoles verticales (75) solidaires des paliers (34, 35) assurant aux deux extrémités (17) de la barre de pression (8) un déplacement vertical identique.

2. Dispositif de maintien selon la revendication 1, caractérisé en ce que la barre de pression (8) comporte constamment une position horizontale assurant une pression uniforme sur toute la largeur de la pile de matériaux en plaques.

3. Dispositif de maintien selon la revendication 1, caractérisé en ce que le mécanisme d'appui (3) comporte deux poutres (5, 6) reliées entre-elles par une entretoise (96) pour obtenir un espace libre (7) pour le passage de la lame de scie, et dont les extrémités (117) coopèrent avec des moyens moteurs assurant une pression uniforme des poutres (5, 6) sur toute la largeur de la pile de matériaux en plaques.

4. Dispositif de maintien selon la revendication 3, en ce que les moyens moteurs du mécanisme d'appui (3) comportent, d'une part, un support vertical (119) solidaire de l'extrémité correspondante (117) de l'ensemble des poutres (5, 6) et pourvus de paliers (134, 135), ces supports verticaux (119) avec leurs paliers (134, 135) étant soumis à un mouvement vertical, et, d'autre part, au moins un vérin (178) fixé sur une semelle (149) solidaire de la table (18) et dont l'extrémité (187) du piston (188) soulève et/ou abaisse le support vertical (119) par l'intermédiaire d'une traverse (189) ainsi qu'un axe de guidage (144) solidaire de la table par l'intermédiaire d'une semelle (149) et le long duquel coulissent les paliers (134, 135) du support vertical (119).

5. Dispositif de maintien selon la revendication 1, caractérisé en ce que l'axe de guidage (144), dont l'axe vertical (190) est situé dans le plan vertical (100) de la semelle (149), comporte une crémaillère (164) le long de laquelle se déplace un pignon denté (169).

6. Dispositif de maintien selon la revendication 1, caractérisé en ce que le mécanisme d'appui (3) comporte un arbre transversal (172) dont chaque extrémité est pourvue d'un pignon denté (169) solidaire en rotation dudit arbre (172), celui-ci transmettant le mouvement de rotation de l'un des pignons dentés (169) à l'autre pignon denté (169).

7. Dispositif de maintien selon la revendication 1, caractérisé en ce que l'une des poutres (6) du mécanisme d'appui (3) comporte des paliers (192) pour maintenir l'arbre transversal (172).

**Patentansprüche**

1. Vorrichtung zum Halten von plattenförmigen Materialien auf den Tischen einer Sägesmachine, insbesondere für den Endschnitt der plattenförmigen Materialien, mit einem Auflagemechanismus (3), der über eine Winde (178) einer senkrechten Bewegung unterworfen ist, dadurch gekennzeichnet, dass sie einen Relaismechanismus (4) aufzeigt, der mit einer Querdruckstange (8) versehen ist, die sich über die gesamte Länge der Tische (18) der Sägemaschine erstreckt und von der jedes Ende (17) eine senkrechte Stütze (19) aufzeigt, die mit Lagern (34, 35) versehen ist, die eine Lagerbuchse (38, 39) aufzeigen, wobei diese Querdruckstange (8) einer senkrechten Bewegung unterworfen ist, die von motorischen Mitteln bewirkt wird, die zumindest aus einer Winde (78) bestehen, deren unteres Ende (79) fest mit einer Sohle (49) verbunden ist, die am Tisch (18) unterhalb des Sägeblattes befestigt ist, und wobei das Ende (87) des Kolbens (88) fest mit einem Querstück (89) verbunden ist, das selbst fest mit den senkrechten Stützen (19) verbunden ist und mit den lezteren über Transmissionsmittel zusammenwirkt, die aus einer Führungsachse (44) bestehen, deren unteres Ende (45) fest mit der Sohle (49) verbunden ist, wobei diese Führungsachse (44) eine senkrechte Achse (90) aufzeigt, die in der Nähe der Schmalseite (91) der Sohle (49) gelegen ist, um die Druckstange (8) des Relaismechanismus (4) möglichst dicht an den Auflagemechanismus (3) zu bringen, wobei dieser mit einer Zahnstange (64) versehen ist, an der entlang sich ein Zahnrad (69) bewegt, und mit einer Querwelle (72), die an jedem Ende ein Zahnrad (69) aufzeigt, wobei diese Querwelle (72) von Lagern (92) gehalten wird, die fest mit der Druckstange (8) verbunden sind, und von senkrechten Konsolen (75), die fest mit den Lagern (34, 35) verbunden sind, wobei sie für die beiden Enden (17) der Druckstange (8) eine gleiche senkrechte Verlagerung bewirken.

2. Vorrichtung zum Halten gemäss Anspruch 1, dadurch gekennzeichnet, dass die Druckstange (8) ständig eine waagerechte Stellung aufzeigt, die für einen gleichförmigen Druck auf der gesamten Breite des Stapels aus plattenförmigen Materialien sorgt.

3. Vorrichtung zum Halten gemäss Anspruch 1, dadurch gekennzeichnet, dass der Auflagemechanismus (3) zwei Balken (5, 6) aufzeigt, die durch eine Traverse (96) miteinander verbunden sind, um einen freien Raum (7) für den Durchgang des Sägeblattes zu schaffen, und deren Enden (117) mit motorischen Mitteln zusammenwirken, die einen gleichförmigen Druck der Balken (5, 6) auf der gesamten Breite des Stapels von plattenförmigen Materialien gewährleisten

4. Vorrichtung zum Halten gemäss Anspruch 3, dadurch gekennzeichnet, dass die motorischen Mittel des Auflagemechanismus (3), einerseits, eine senkrechte Stütze (119) aufzeigen, die fest mit dem entsprechenden Ende (117) der Einheit der Balken (5, 6) verbunden und mit Lagern (134, 135) versehen ist, wobei diese senkrechten Stützen (119) mit ihren Lagern (134, 135) einer senkrechten Bewegung unterworfen sind und, andererseits, mindestens eine Winde (178), die an einer Sohle (148) befestigt ist, die fest mit dem Tisch (18) verbunden ist, und wobei das Ende (187) ihres Kolbens (188) die senkrechte Stütze (119) über ein Querstück (189) hebt und/oder senkt, sowie eine Führungsachse (144), die fest über eine Sohle (149) mit dem Tisch verbunden ist, und an der entlang die Lager (134, 135) der senkrechten Stütze (119) gleiten.

5. Vorrichtung zum Halten gemäss Anspruch 1, dadurch gekennzeichnet, dass die Führungsachse (144), deren senkrechte Achse (190) in der senkrechten Ebene (100) der Sohle (149) gelegen ist, eine Zahnstange (164) aufzeigt, an der entlang sich ein Zahnrad (169) bewegt.

6. Vorrichtung zum Halten gemäss Anspruch 1, dadurch gekennzeichnet, dass der Auflagemechanismus (3) eine Querwelle (172) aufzeigt, von der jedes Ende mit einem Zahnrad (169) versehen ist, das fest in der Drehung mit der vorerwähnten Welle (172) verbunden ist, wobei diese die Drehbewegung eines der Zahnräder (169) auf das andere Zahnrad (169) überträgt.

7. Vorrichtung zum Halten gemäss Anspruch 1, dadurch gekennzeichnet, dass einer der Balken (6) des Auflagemechanismus (3), Lager (192) zum Halten der Querwelle (172) aufzeigt.

**Patentansprüche**

1. Device for holding plate materials on the tables (18) of a sawing machine, in particular for the final cutting of the plate materials, including a supporting mechanism (3) subjected to a vertical movement through a jack (178), characterized in that it possesses a relay mechanism (4) fitted with a transverse pressure bar (8) that covers the entire length of the tables (18) of the sawing machine and each end (17) of which has a vertical support (19) fitted with bearings (34, 35) provided with a bushing (38, 39), with this transverse pressure bar (8) subjected to a vertical movement brought about by motor means that consist of one jack (78) at least, the bottom end (79) of which is fitted solidly to a sole (49) attached to the table (18) downward from the saw-blade and of which the end (87) of the piston (88) is secured solidly to a crossbar (89) fitted itself solidly to the vertical supports (19) and cooperating with the latter via means of transmission that consist of a guide axle (44), the bottom end (45) of which is secured solidly to the sole (49), with this guide axle (44) having a centerline (90) situated close to the narrow edge (91) of the sole (49) in order to bring the pressure bar (8) of the relay mechanism (4) as close as possible to the supporting mechanism (3), being fitted with a rack (64), along which travels a toothed pinion (69) and with a transverse axle (72) that has, at each end, the toothed pinion (69), with this transverse axle (72) held by bearings (92) fitted solidly to the pressure bar (8) and by vertical consoles (75) secured solidly to the bearings (34, 35), ensuring for the two ends (17) of the pressure bar (8) an identical vertical displacement.

2. Device for holding according to claim 1, characterized in that the pressure bar (8) has constantly a horizontal position that ensures an even pressure over the entire width of the pile of plate materials.

3. Device for holding according to claim 1, characterized in that the supporting mechanism (3) includes two beams (5, 6) that are interlinked by a crossbar (96) in order to obtain a clear space (7) for the passage of the saw-blade, and the ends (117) of which co-operate with motor means that ensure an even pressure of the beams (5, 6) over the entire width of the pile of plate materials.

4. Device for holding according to claim 3, characterized in that the motor means of the supporting mechanism (3) include, on one hand, a vertical support (119) fitted solidly to the corresponding end (117) of the system of beams (5, 6) and fitted with bearings (134, 135), with these vertical supports (119) with their bearings (134, 135) subjected to a vertical movement and, on the other hand, one jack (178), at least, secured to a sole (149) fitted solidly to the table (18), and the end (187) of the piston (188) of which raises and/or lowers the vertical support (119) via a crossbar (189), as well as a guide axle (149) fitted solidly to the table via a sole (149) and along which are sliding the bearings (134, 135) of the vertical support (119).

5. Device for holding according to claim 1, characterized in that the guide axle (144), the vertical centerline (190) of which is situated in the vertical plane (100) of the sole (149), includes a rack (164) along which travels a toothed pinion (169).

6. Device for holding according to claim 1, characterized in that the supporting mechanism (3) includes a transverse axle (172), each end of which is provided with a toothed pinion (169) fitted solidly in rotation to the aforesaid axle (172), with the latter transmitting the rotary movement of one of the toothed pinions (169) to the other toothed pinion (169).

7. Device for holding according to claim 1, characterized in that one of the beams (6) of the supporting mechanism (3) possesses bearings (192) for the purpose of holding the transverse axle (172).

## FIG. 1

1

FIG. 3

FIG. 2

# FIG. 4

# FIG. 5

# FIG. 6

# FIG. 8